(19) Europäisches Patentamt
European Patent Office
Office européen des brevets

(11) Numéro de publication : **0 298 006 B1**

(12) # FASCICULE DE BREVET EUROPEEN

(45) Date de publication du fascicule du brevet :
**18.09.91 Bulletin 91/38**

(51) Int. Cl.⁵ : **A47J 31/40**

(21) Numéro de dépôt : **88470013.9**

(22) Date de dépôt : **29.06.88**

(54) **Mécanisme pour la lixiviation de doses variables.**

(30) Priorité : **29.06.87 FR 8709284**

(43) Date de publication de la demande :
**04.01.89 Bulletin 89/01**

(45) Mention de la délivrance du brevet :
**18.09.91 Bulletin 91/38**

(84) Etats contractants désignés :
**CH DE ES FR GB IT LI**

(56) Documents cités :
**FR-A- 550 958**
**FR-A- 1 373 832**
**FR-A- 1 391 610**
**US-A- 2 811 098**
**US-A- 2 935 011**

(73) Titulaire : **Mackiewicz, Michel**
**2 rue de l'Amitié à Fèves**
**F-57210 Maizieres-les-Metz (FR)**

(72) Inventeur : **Mackiewicz, Michel**
**2 rue de l'Amitié à Fèves**
**F-57210 Maizieres-les-Metz (FR)**

Jouve, 18, rue Saint-Denis, 75001 PARIS

Description

L'invention concerne un mécanisme de lixiviation pour doses variables de matière première.

Actuellement, une grande variété de modèles de machines à café-express plus ou moins automatisées existe sur le marché. Toutes ces machines ont malheureusement un faible débit car elles ne peuvent traiter qu'une dose (parfois deux) par cycle ; pour faire "n" doses de boisson elles doivent répéter "n" fois le cycle complet.

L'invention permet comme elle est caractérisée dans la seule revendication la réalisation de machines automatiques pour le traitement à la demande, de une ou plusieurs doses de matière-première, par lixiviation. L'invention concerne particulièrement les machines professionnelles et familiales pour L'élaboration des "café-express".

Les machines intégralement automatiques consomment toutes, plus de mouture que les machines "classiques" car le remplissage automatique du récipient de lixiviation n'est pas assuré de façon homogène avec une mouture de finesse idéale, ce qui contraint à une mouture plus grosse, trop grosse pour être parfaitement exploitée rapidement avec économie.

Le principe du récipient à capacité variable, lui-même très simple, pose surtout des problèmes d'exploitation inhérants à sa forme tubulaire.

Comment introduire une quantité variable et déterminée de matière-première dans un récipient de cette forme ?

Comment disposer régulièrement cette matière-première ?

Comment actionner le "PISTON" obturateur-égalisateur-éjecteur ?

Comment bloquer ce piston pendant la lixiviation ?

Comment actionner l'obturateur inférieur ?

Comment sécher les marcs, comment les éjecter ?

Comment résoudre les problèmes d'étanchéité ?

Comment réduire au minimum le temps du cycle complet ?

Comment éviter que les filtres se bouchent ?

Comment réaliser un mécanisme simple dans sa conception, sa mise en oeuvre et dans son exploitation intensive ?

Comment n'imposer à l'utilisateur qu'un entretien très simple et minimum tout en garantissant une fiabilité maximale ?

Ces problèmes sont résolus dans l'exemple de réalisation décrit ci-après concernant un mécanisme pour équiper les machines automatiques à grand débit (1400 tasses/heure) pour la préparation des café-express.

Dans les machines actuelles le récipient de lixiviation a la forme d'un cylindre droit circulaire d'environ 4 à 5 cm de diamètre et de 0,8 à 1,2 cm de hauteur, suivant qu'il est destiné à contenir une ou deux doses de mouture. Le fond plat de ce récipient constitue le filtre de sortie de la boisson. L'épaisseur de poudre traversée par le solvant est un facteur très important dans le processus de lixiviation et une longue expérience a montré que l'épaisseur optimale est d'environ 9 mm et qu'elle varie en fonction de la qualité du café et de la granulométrie de la mouture, mais aussi en fonction de la température et de la pression de l'eau chaude.

Le récipient conforme à l'invention préserve une épaisseur optimale. Il est constitué par l'espace compris entre deux surfaces cylindriques coaxiales de rayon R et r ; la différence R − r = e est l'épaisseur de poudre traversée par le solvant puisque les parois cylindriques sont constituées en partie par le filtre d'entrée et par le filtre de sortie du solvant.

La variabilité du volume utile du récipient est possible grâce à la position verticale de son axe principal, grâce à son mode de remplissage variable permettant à la mouture d'avoir une surface supérieure au même niveau, et surtout grâce à son mode de fermeture qui s'opère par la pénétration dans le récipient d'une pièce tubulaire d'épaisseur, cette pénétration se faisant jusqu'au moment où la tranche inférieure du "tube" bute contre la mouture.

Le mécanisme de distribution de mouture comporte une trémie de stockage de matière-première traversée axialement par l'arbre moteur d'un moulin-broyeur à meules coniques (de type connu) occupant la partie basse de ladite trémie. Pour recevoir la mouture le récipient est positionné dans l'axe du moulin, au ras de la base des meules dont le rayon nominal r' est compris entre r et R, en conséquence de quoi la rotation du moulin pendant une durée programmée "projettera" la dose de mouture fraîche de façon homogène dans la chambre ch2.

L'invention est exposée ci-après plus en détail à l'aide de dessins.

La figure 1 est une demie coupe de la pièce D caractérisante.

La figure 2 est une demie coupe des trois pièces A, B et C dont l'assemblage constitue le récipient de lixiviation caractérisant.

La figure 3 est une coupe de la figure 2.

La figure 4 est une coupe de la figure 5 explicitant le transfert.

La figure 5 est une vue schématique en élévation de l'ensemble mécanique.

La figure 6 est une vue en élévation avec coupes partielles du "groupe" de lixiviation concernant l'exemple de réalisation.

La connaissance du récipient de lixiviation étant nécessaire à la compréhension du fonctionnement de la machine le mettant en oeuvre il est naturel de commencer par la description de ce récipient.

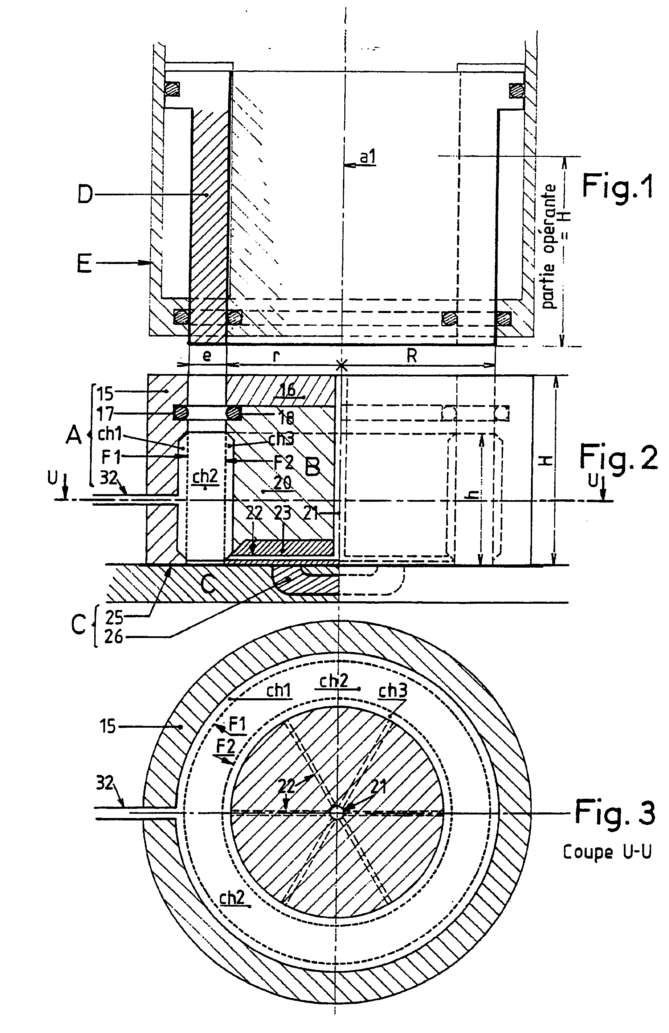

## 1 — RECIPIENT DE LIXIVIATION A CAPACITE VARIABLE. Voir Fig. 1, 2, 3.

Il est essentiellement constitué de quatre parties "autonomes" dont trois sont réunies : A, B et C. La quatrième partie D qui sert normalement de "bouchon" peut être commune à plusieurs récipients, elle fait partie d'un ensemble E "axé" sur elle pour lui imprimer les mouvements de translation verticaux adéquats aux moments opportuns.

La partie A, ou "PORTE-FILTRE EXTERIEUR", comprend cinq parties : le corps 15 incluant la chambre de répartition du solvant ch1, le FILTRE EXTERIEUR F1, le conduit d'arrivée 32, le JOINT D'ETANCHEITE 17.

Le corps A a globalement la forme d'un cylindre droit de hauteur H et de base annulaire, cet anneau circulaire régulier a un rayon intérieur égal à R. Le rôle de A est de supporter le FILTRE F1 qui matérialise la surface latérale extérieure de la chambre de lixiviation ch2 ; A doit aussi répartir le solvant sur toute la surface extérieure du filtre par lequel le solvant pénètre la poudre à traiter (rôle de ch1).

La partie B, nommée "NOYAU PORTE-FILTRE", comprend les sept parties suivantes : le corps 20, la chambre de réception ch3, le FILTRE F2, les conduits 21 et 22 pour l'évacuation du solvant chargé, la SEMELLE 23 pour fermer le circuit de des aimants permanents 26, le JOINT D'ETANCHEITE 18 et le CHAPEAU 16.

Le noyau B a la forme d'un cylindre droit à base circulaire de rayon égal à r, sa hauteur égale à H est rigoureusement celle de A. Son rôle est de supporter F2 par lequel le solvant chargé quitte la poudre pour être récupéré dans la chambre ch3 et aboutir dans le canal 21.

La partie C, nommée "OBTURATEUR" (parce qu'elle obture le fond du récipient et l'ouvre pour l'éjection des marcs) comprend trois éléments essentiels : le CORPS C incluant un ou plusieurs AIMANTS PERMANENTS 26 pour le maintien de B, et une feuille d'élastomère-fluoré adhérisée 25 pour favoriser le GLISSEMENT de C sous A et assurer l'étanchéité.

Le corps de C est globalement plat, son rôle est de supporter A et B dont il assure la parfaite coïncidence des axes ; il a les moyens de "s'effacer" par glissement sous A au moment de l'éjection des marcs.

La partie D comporte l'unique pièce D dont le rôle primordial est d'assurer la variabilité du volume utile de la chambre de lixiviation ch2, tout en "bouchant" son ouverture supérieure. Mais D est aussi utilisée pour "tasser" légèrement la mouture et pour éjecter les marcs.

Sa partie opérante d'hauteur égale au moins à H a la forme d'un tube cylindrique d'épaisseur constante égale à e = R − r.

Les parties A, B, C et D sont séparables les unes des autres, mais normalement B est fixée à C par l'AIMANT 26 et A est constamment pressée contre C dans une position mécaniquement définie, de telle sorte que les axes particuliers à A, B et C coïncident en un axe unique al.

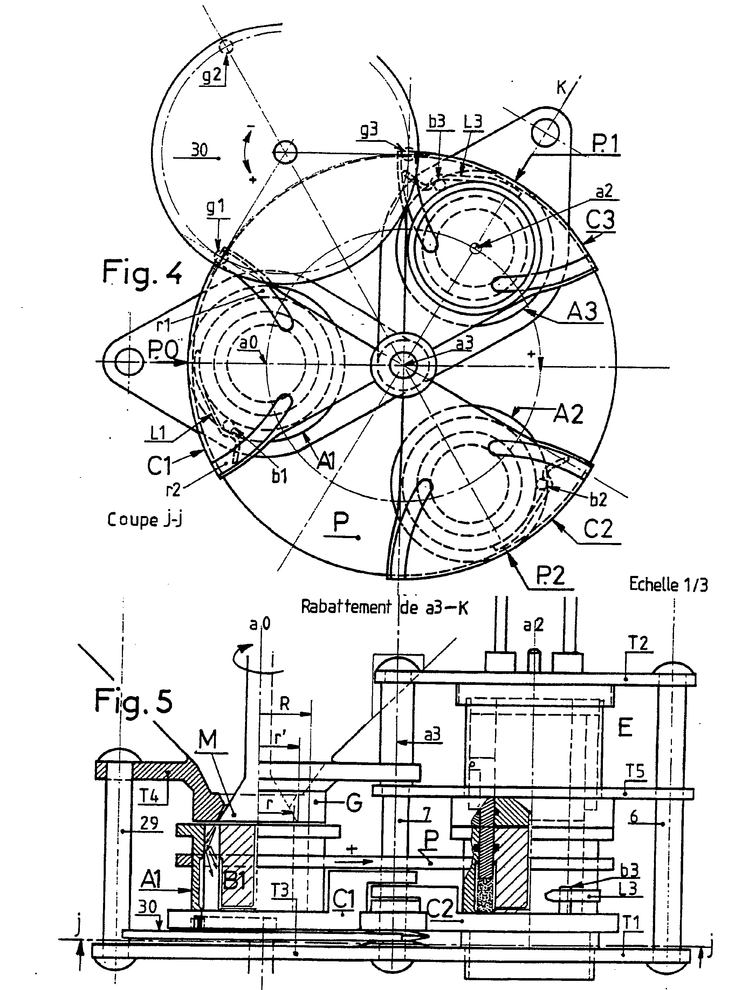

## 2 — STRUCTURE ET FONCTIONNEMENT SCHEMATIQUE. Voir Fig. 4 et 5

Un plateau horizontal tournant P, d'axe vertical a3 possède trois alésages pour y loger trois pièces A1, A2 et A3 dont les bases reposent sur trois obturateurs coplanaires C1, C2 et C3 pouvant pivoter autour de a3, indépendamment, grâce à leurs moyeux décalés. Au centre de chacun des PORTE-FILTRES A se trouve un NOYAU B fixé sur C par une puissante force magnétique due à l'AIMANT PERMANENT 26 et à la semelle 23 en fer.

En position repos le plateau fait correspondre les axes des trois PORTE-FILTRES A1, A2 et A3 aux positions P.0, P.1 et P.2 décalées chacune de 120°. La position P.0 est déterminée par l'axe a0 du MOULIN DISTRIBUTEUR G coïncidant avec l'axe al de A1, les positions P.1 et P.2 sont prises par rotations positives successives du plateau entrainant avec lui les trois ensembles (A-B-C)1, (A-B-C)2 et (A-B-C)3.

A la position P.1 correspond l'axe a2 de l'ensemble E nommé "GROUPE DE LIXIVIATION" dans lequel s'opérera le traitement complet de la mouture jusqu'à l'éjection des marcs et éventuellement le rinçage des filtres.

Un système original d'entrainement rassemblant des moyens connus fort simples assure le transfert de l'ensemble A-B-C dès après chargement en poudre, de la position P.0 à la position P.1. L'originalité du système réside dans sa capacité à ouvrir le fond du récipient A-B-C placé en P.1 simplement par l'inversion du sens de marche du système moteur.

## 3 — DESCRIPTION DETAILLEE D'UN EXEMPLE DE REALISATION. Voir Fig. 4-5-6

Le chassis du mécanisme comprend trois tirants 6, 7 et 29, et les quatre traverses T1, T2, T3 et T4 ; Le tirant 7 matérialise l'axe a3. La cinquième traverse T5 coulisse sur les deux tirants 6 et 7. Pour simplifier, les moteurs électriques du système d'entrainement et du moulin à café ne sont pas représentés car ils ne posent pas de problèmes.

Dans l'exemple décrit ci-dessous, on emploie l'air comprimé pour actionner l'ensemble E et pour sécher les marcs.

L'analyse des phases successives d'un cycle complet permettra conjointement la description des pièces constitutives du mécanisme.

Au repos l'ensemble (A-B-C)1 est dans la position P.0 parfaitement définie par les positions des galets g1 et g3 du disque moteur 30.

— PHASE 1 : DISTRIBUTION DE LA MOUTURE.

Le récipient A-B-C étant au ras de la base des meules coniques de rayon nominal r' tel que r < r' < R, la mouture y sera "projetée" directement d'une façon homogène.
REMARQUE : la distribution de mouture peut se faire dans un porte-filtres en P.0 pendant qu'un autre porte-filtres est en cours d'exploitation dans la position P.1. Ainsi le temps de distribution pourra être négligé pendant les moments de forte demande, bien qu'il dure environ 1s/dose.

— PHASE 2 : TRANSFERT DU PORTE-FILTRES (A-B-C)1 de la position P.0 à la position P.1. Voir la figure 4.

On utilise pour cela le principe connu de la croix de Malte.
L'arrêt du moulin doseur déclenche la mise en rotation de +240° du disque 30, ce qui opère une rotation de +120° pour le plateau P. En effet le galet g1 entraine C1 de +60° par la rainure r1 et le galet g2 entraine ensuite C1 de +60° par la rainure r2. La butée b1 solidaire de C1 pousse le corps A1 solidaire du plateau et des deux autres corps A2 et A3. Dans cette rotation de P (+120°), les ressorts en lame L2 et L3 ont un rôle important, ils garantissent par leur action sur les butées b2 et b3 les positions relatives des ensembles (A-B-C)2 et (A-B-C)3 bien que les forces antagonistes à cette conservation soit négligeables.

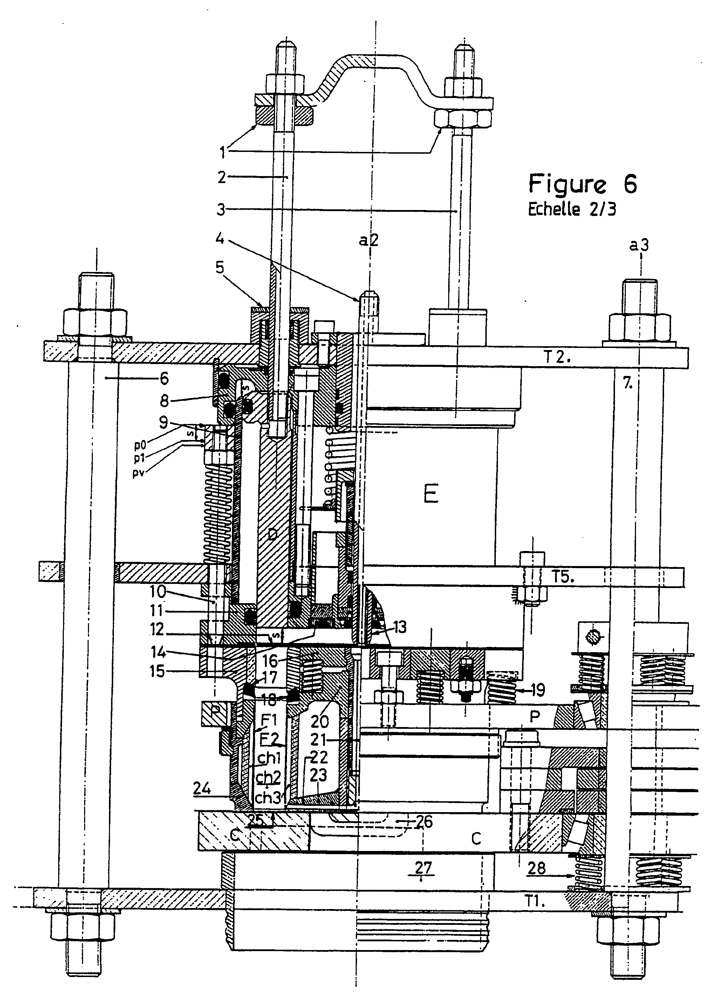

— PHASE 3 : CENTRAGE PARFAIT DU "PISTON" obturateur-égalisateur-éjecteur (D). Voir Fig. 6.

Dès l'arrêt du moteur de transfert, l'air comprimé est envoyé sur la face supérieure du piston verrou 8 qui dans son mouvement de descente actionnera simultanément les trois doigts 10 de centrage externe du piston D et le doigt de centrage interne 13 dont le rôle est de garantir le centrage du noyau. La pression d'air est suffisante pour assurer la compression des trois ressorts de rappel des doigts 10 et du ressort central dans le cas où le noyau ne serait pas en place, mais elle n'est pas suffisante pour comprimer ni les ressorts 19 ni les ressorts 28. Ainsi la course du piston verrou s'arrête dans cette phase dès que sa surface inférieure rencontre le corps de vérin 9 au moment ou le bas de D est juste à l'entrée du récipient de lixiviation. 8 est alors en p1.

— PHASE 4 : FERMETURE DU RECIPIENT DE LIXIVIATION, égalisation de la surface supérieure de la mouture et léger tassage de celle-ci.

L'air à la pression adéquate est envoyé sur la face supérieure du piston D par le tube témoin 3. Le piston se stabilise dès sa fonction remplie.

— PHASE 5 : VERROUILLAGE DU GROUPE DE LIXIVIATION.

La pression maximale adéquate est envoyée sur la face supérieure du piston verrou 8, de sorte qu'il comprime les ressorts 28 ce qui à pour effet de mettre l'obturateur C en contact avec le socle 27, puis seront comprimés les ressorts 19 ce qui assure la compression des joints 17 et 18 dont le rôle secondaire est d'immobiliser le piston D pendant la lixiviation, car la forte pression d'eau sur sa tranche inférieure pourrait le faire remonter. C'est la pression du piston verrou qui assure l'étanchéité entre A et C. Le piston verrou 8 est alors en position de verrouillage pv.

— PHASE 6 : LIXIVIATION.

L'eau chaude sous pression est envoyée dans ch1 par un conduit non représenté sur la figure 6. Elle pénètre dans la chambre de lixiviation ch2 après avoir traversé le filtre F1, puis en sort par le filtre F2 et rejoint le conduit central 21 pour sortir de la machine par le tube 4. La dose d'eau chaude est suivie d'une certaine quantité d'air comprimé dont le rôle est de sécher les marcs et de vider les conduits de tranfert des liquides qui pourraient y stagner.

— PHASE 7 : DECOMPRESSION avant ouverture.

Dès que la pression d'air a atteint un certain seuil dans ch2, la chambre supérieure du piston verrou 8 est en partie décompressée de telle sorte que 8 reprenne la position p1. Simultanément les chambres supérieures et inférieures du piston D sont mises en communication, ce qui a pour effet de décomprimer les joints 17 et 18 et de faire remonter D d'une faible hauteur tout en permettant aux ressorts 28 de faire décoller C du socle 27 d'une fraction de milimètre.

— PHASE 8 : OUVERTURE DU RECIPIENT pour l'éjection des marcs. Voir Fig. 4

Le piston verrou 8 ayant repris la position p1 sous la poussée des ressorts 19 puis 28, la mise en rotation négative du disque 30 est déclenchée. Au départ le galet g2 est en prise avec C1 par la rainure r2, et une rotation de −108° environ du disque 30 entraine une rotation de −54° de l'obturateur C1, rotation suffisante pour ouvrir complétement le fond du récipient. Au moment du "recul" de C1 le piston D est encore dans A1 ce qui interdit le recul de l'ensemble du plateau P et des deux autres porte-filtres. L'obturateur C1 se libère de A1 en agissant contre le ressort à lame L1 pressé sur la butée b1. Le glissement de C sous A est favorisé par la feuille anti-adhérente 25.

— PHASE 9 : EJECTION DES MARCS.

La pression d'air adéquate est envoyée sur la face supérieure de D par le "tube témoin" 3, ce qui a pour effet de faire descendre D au plus bas de sa course réglée par les écrous 1 qui buteront contre 5 de sorte que D stoppe sa course exactement aux ras du bas de A. Les marcs ainsi dynamisés se détacheront facilement de D, car bien séchés ils forment un corps compact.

Le noyau B, lui n'a pas suivi D dans son mouvement de descente car il est fermement maintenu par un ensemble d'aimants permanents 14 agissant sur le "chapeau" 16 du noyau B, 16 étant en fer.

— PHASE 10 : RETOUR DE L'OBTURATEUR
dans sa position normale.

Dès l'instant où D a atteint sa position basse extrême le moteur de 30 est alimenté pour une rotation positive de 108° qui replacera C dans sa position normale par rapport à A et B. Le piston D étant maintenu à sa position basse pendant le retour de C, sa tranche inférieure sera raclée par C pour en détacher d'éventuels marcs.

— PHASE 11 : REMISE A ZERO.

Il suffit que les pistons D et 8 reprennent les positions hautes de départ pour que la machine puisse opérer la rotation suivante de P qui placera le récipient de lixiviation suivant dans la position P.1 dès qu'il sera chargé de mouture, chargement qui a pu s'opérer pendant le cycle précedemment en cours. Ce retour à la position zéro de l'ensemble E s'opère par la mise à l'air libre du vérin de verrouillage et par l'envoi d'air comprimé sous le piston D par le tube témoin 2.

La séparation des pièces magnétiques 16 et 14 se fait au cours de cette phase 11 car l'ensemble magnétique 23-26 est plus puissant que l'ensemble 16-14 et cette séparation est favorisée par la pression bien calculée qu'exerce le doigt 13 sur le fond de l'alésage de centrage de B.

ENTRETIEN DE LA PROPRETE DES FILTRES

Le système de fixation des PORTE-FILTRES A sur le plateau P est simplifié de manière à en permettre la séparation qui se fera en P.2. Ainsi les filtres F1 pourront être nettoyés manuellement.

Les filtres F2 beaucoup plus sensibles à l'encrassement devront être nettoyés quotidiennement en dehors de la machine dont ils peuvent être extrait facilement car les noyaux B qui les incorporent sont fixés magnétiquement sur les obturateurs C, et un outil très simple permet de les en séparer mais surtout de les y reposer parfaitement centrés.

Il est aussi possible de prévoir un cycle de lavage automatique, ce dernier aurait lieu dans la position P.1, le liquide nettoyant pourrait être injecté par le conduit 4 pour nettoyer le filtre F2.

**Revendications**

1. Mécanisme de lixiviation pour doses variables de matière première caractérisé en ce qu'il comporte un récipient ouvert à sa partie haute par laquelle s'opère son remplissage, ce récipient comportant un espace (ch2) nommé chambre de lixiviation destinée à recevoir la poudre à traiter, en ce que cette chambre de lixiviation est limitée latéralement par deux surfaces cylindriques de même hauteur (H), de différents rayon (R, r) et d'axe commun (a1), en ce que ladite chambre est limitée dans sa partie basse par un fond en forme de couronne constitué par la surface supérieure d'une pièce plate (C) normale audit axe (a1), en ce que lesdites surfaces cylindriques comportent sur une certaine hauteur (h) à partir du fond une partie filtrante pour la surface extérieure (F1) et pour la surface intérieure (F2), en ce que le volume utile de la chambre de lixiviation (ch2) est donc variable de zéro à $h \cdot \pi \cdot (R^2 - r^2)$ en fonction de la pénétration plus ou moins grande dans la dite chambre d'une pièce (D) en forme de tube cylindrique dont l'épaisseur est égale à la différence desdits rayons (R, r) et dont la hauteur est au moins égale à la hauteur (H) du récipient de lixiviation.

**Patentansprüche**

1. Vorrichtung zum Auslaugen variabler Mengen von Rohstoff, dadurch gekennzeichnet, daß sie einen in dessen oberem Bereich offenen Behälter aufweist, durch welchen sie gefüllt wird, wobei dieser Behälter einen als Auslaugkammer, welche dazu bestimmt ist, das zu behandelnde Pulver aufzunehmen, bezeichneten Zwischenraum (ch2) aufweist, wobei diese Auslaugkammer durch zwei zylindrische Oberflächen gleicher Höhe (H), unterschiedlicher Radien (R, r) und gemeinsamer Achse (a1) seitlich begrenzt ist, die genannte Kammer in ihrem unteren Teil durch einen Boden in der Form einer Krone begrenzt ist, der durch die obere Oberfläche eines flachen, zur genannten Achse (a1) senkrechten Stückes (C) gebildet wird, wobei die gennaten zylindrischen Oberflächen auf einer bestimmten Höhe (h) über dem Boden eine Filterpartie für die äußere Oberfläche (F1) und die innere Oberfläche (F2) aufweisen, das Nutzvolumen der Auslaugkammer (ch2) in Abhängigkeit von der mehr oder weniger großen Eindringtiefe eines Stückes (D) in die genannte Kammer von Null bis h · $\pi$ · $(R^2 - r^2)$ variabel ist, wobei das Stück (D) die Form eines zylindrischen Rohres hat, dessen Dicke gleich der Differenz zwischen den beiden genannten Radien (R, r) ist und dessen Höhe mindestens gleich der Höhe (H) des Auslaugbehälters ist.

## Claims

1. An apparatus for lixiavating variable amounts of raw material, characterized in that it has a container open in the upper area thereof, through which it is filled, this container having an intermediate space (ch2) referred to as lixiavation chamber adapted to receive the powder to be treated, this lixiavation chamber being laterally confined by two cylindrical surfaces of equal height (H), different radii (R, r) and joint axis (a1), the said chamber is confined in its lower portion by a bottom having the shape of a crown, which is formed by the upper surface of a flat piece (C) normal to said axis (a1), the said cylindrical surfaces having a filter part for the outer surface (F1) and the inner surface (F2) at a certain height (h) above the bottom, the efficient volume of the lixiavation chamber (ch2) is variable from zero to $h \cdot \pi \cdot (R^2 - r^2)$ as a function of the more or less great penetration depth of a piece (D), the piece (D) having the shape of a cylindrical tube whose thickness equals the difference between the two said radii (R, r) and whose height equals at least the height (H) of the lixiavation container.

Fig.1

partie opérante = H

a1

D

E

e | r | R

Fig.2

15
16
17
18
A ⟨ ch1
    ch3
F1
F2 B
U
32
ch2
20
H
h
22 23 21
C ⟨ 25
    26

Fig.3

Coupe U-U

ch1 ch2 ch3
15
F1
F2
32
22 21
ch2

Fig. 4

Coupe j-j

Fig. 5

Rabattement de a3-K

Echelle 1/3

Figure 6
Echelle 2/3